# EUROPEAN PATENT APPLICATION

(11) **EP 0 825 758 A2**
(43) Date of publication of application: **25.02.1998**
(21) Application number: 97113912.6
(22) Date of filing: 12.08.1997
(51) Int. Cl.: H04N 1/21, H04N 5/93

(54) **Printing system**

(30) Priority: 22.08.1996 JP 220999/96
(71) Applicant: HITACHI, LTD., Chiyoda-ku, Tokyo 101 (JP)
(72) Inventor: Ishitobi, Tatsuya, Kawasaki-shi, Kanagawa-ken 211 (JP); Asada, Akihiro, Chigasaki-shi, Kanagawa-ken 253 (JP); Omata, Takashi, Ayase-shi, Kanagawa-ken 252 (JP); Takano, Yuuichi, Hitachinaka-shi, Ibaraki-ken 312 (JP)
(74) Representative: Altenburg, Udo, Dipl.-Phys.

(57) **Abstract**

The operability of the printing system is improved by providing the digital camera with a print instructing function, and supplying electric power from the printer to the digital camera. Furthermore, a novel result of printing, wherein image data and information related to the image data are connected together, is generated by merging the image data and the information related to the image data together, and values of the results of printing is increased.

## Description

### Background of the Invention

The present invention relates to a improved printing system comprising a digital camera and a printer.

Conventionally, when image data recorded in a digital camera were printed, it took a long time for obtaining the printed image data. Because, transferring the image data recorded once in the digital camera to a personal computer was necessary, and the transferred image data was printed by a printer connected to the personal computer.

Even if the printing system was capable of transferring the image data directly from the digital camera to the printer, the image data to be printed were selected at the digital camera side, and instruction for the printing must be performed at the printer side. Therefore, the operability of the printing system is not easy.

Furthermore, only the image data recorded in the digital camera were printed onto papers. In order to add information relating to the image data, editing the image data by the personal computer was necessary before printing.

### Summary of the Invention

The present invention is aimed at improving the operability of the printing system for printing the image data recorded by the digital camera by data processing.

The present invention provides preferable printing result in the printing system comprising a digital camera and a printer by performing printing process after merging image data recorded in the digital camera and information relating to the image data.

### BRIEF DESCRIPTION OF THE DRAWINGS

FIG. 1 is a block diagram indicating the composition of the printing system relating to the present invention;
FIG. 2 is a schematic illustration indicating an image in the image data recording means of the printing system relating to the present invention;
FIG. 3 is a schematic illustration indicating an image, wherein the image data and the related information are merged, in accordance with the present invention;
FIG. 4 is a schematic image indicating the numbered thumb-nail in accordance with the present invention;
FIG. 5 is a schematic image indicating a list of related information in accordance with the present invention;
FIG. 6 is a schematic image indicating a list of related information in addition to the thumb-nail in accordance with the present invention;
FIG. 7 is a schematic image indicating a result of printing, wherein the two image data are correlated, in accordance with the present invention;
FIG. 8 is a block diagram indicating a composition of the printing system, which is capable of simultaneously connecting the power line in addition to connecting the signal line, in accordance with the present invention.

### DETAILED EXPLANATION OF THE PREFERRED EMBODIMENTS

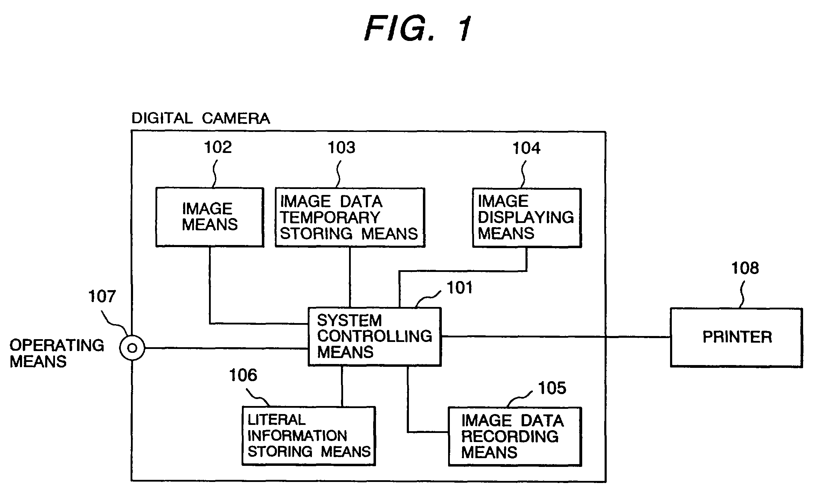

FIG. 1 indicates the composition of the printing system according to the present invention.

The printing system relating to the present invention comprises system controlling means 101, image photographing means 102, image data temporary storing means 103, image display means 104, image data recording means 105, literal data storing means 106, operating means 107, and printer 108. The means from 101 to 107 compose the digital camera.

The system controlling means 101 controls all the operation of the printing system such as photographing image, recording the image data, displaying the image, displaying a menu relating to operation of the digital camera, generating printing data, and soon. For instance, the system controlling means can be realized with a microcomputer.

The image photographing means 102 generates image data by converting optical information to electric information. For instance, the image photographing means can be realized with CCD.

The image data temporary storing means 103 stores image data generated by the image photographing means 102 and image data to be displayed in the image displaying means

The image displaying means 104 displays image data stored in the image data temporary storing means 103. The image displaying means 104 is, for instance, a liquid crystal monitor.

The image data storing means 105 stores successively the photographed image data and the data relating to the image data. For instance, the image data storing means 105 can be realized with a flash memory.

The literal data storing means 106 stores literal information and various menu format, which are necessary for displaying menu and others in the image displaying means 104, and for printing literal information by the printer 108.

The operating means 107 transmits various instructions such as image photographing by users, image displaying, and others to the system controlling means 101. For instance, the operating means can be realized with operating keys.

The printer 108 prints the image (data) transmitted from the system controlling means 101. The printer is, for instance, a thermal printer.

The composition of the printing system indicated in FIG. 1 is almost as same as the conventional printing system, and its practical realizing means such as image photographing, image displaying, recording of the image data, and the like are well known to the public. The present invention realizes a novel ease-of-use with the well known composition as indicated in FIG. 1.

In accordance with the above mentioned reason, explanation on the practical realizing means such as image photographing, image displaying, recording of the image data, and the like, of which technology are well known to the public, is omitted all through the present specification. Hereinafter, the novel ease-of-use with the printing system of the present invention is explained.

### (1) The operability of printing instruction.

In accordance with the conventional printing system comprising a digital camera and a printer, when printing the image data, the image to be printed was decided with the displaying means such as liquid crystal monitor of the digital camera and the operating means such as operating keys and the operating menu, and subsequently, printing the image data was performed by instructing the printing with printing instructing keys and the like provided at the printer. Accordingly, the user had to operate two apparatus such as the digital camera and the printer. Therefore, the operability could not be regarded as easy.

In accordance with the present invention, both the two operation at printing the image data of deciding the image to be printed and instructing the printing can be realized with the digital camera. Therefore, the above problem of the conventional operation can be solved. Hereinafter, the method for realizing the present invention is explained referring to FIG. 1.

The decision of the image to be printed is realized as follows:

The image data recorded in the image data recording means 105 are input in the image data temporary storing means 103 in the system controlling means 101 by the operating means 107, and the image is displayed in the image data displaying means 104. By performing the above mentioned operation repeatedly, the image data recorded in the image data recording means 105 can be displayed successively in the image displaying means 104. Therefore, the image to be printed can be decided.

The instruction for printing is realized as follows:
(a) A special key for instructing the printing is provided in the operating means 107.
   The system controlling means 101 converts the image data to be printed, which is stored in the image data temporary storing means 103, to the data for printing by the instruction from the special key for instructing the printing. The data for printing is spread in an area provided in the image data recording means 105. Subsequently, the printing is realized by transmitting the spread data to the printer.
(b) Instructing the printing by operating a combination of the plural operating keys of the operating means 107.
   The instruction for printing is transmitted to the system controlling means 101 by operating a combination of the plural operating keys having independent uses provided at the operating means 107. The performance after instructing the printing is as the same as the above (a).
(c) An item for instructing printing is provided into the operating menu.
   An item for instructing printing is provided into the stored operating menu in the literal data storing means 106. At printing, the instruction for displaying the operating menu is transmitted to the system controlling means 101 by the operating means 107, and the operating menu is displayed in the image displaying means 104. The item for instructing the printing in the operating menu is selected. Accordingly, the instruction for printing can be transmitted to the system controlling means 101. The operation after instructing the printing is as the same as the above (a).

In accordance with the present invention explained above, both the two operations generated at the printing of deciding the image to be printed and instructing the printing the image data can be performed with the digital camera in the almost same composition as the conventional printing system. Therefore, the operability of printing in the printing system can be improved.

### (2)The printing of the information related to the image data.

The conventional printing system comprising a digital camera and a printer was aimed mainly at printing only the image photographed by the digital camera, and there was no printing system which printed both the image photographed by the digital camera and information related to the image onto a piece of paper. Therefore, writing information related to the image additionally into the printed image was necessary. Furthermore, in order to print the photographed image and the information related to the image onto a same piece of paper, it was necessary to send the image data stored in the digital camera to a personal computer and the like, which was capable of editing the image data, to edit the image data, and subsequently, to print the image data by sending the edited image data to the printer. Accordingly, performing various procedures was necessary for printing information relating to the image onto a printed article.

In accordance with the present invention, both the image data and the information relating to the image data can be printed onto the same piece of paper, and the above mentioned conventional problem can be solved. Hereinafter, the method is explained referring to FIGs. 1, 2, and 3.

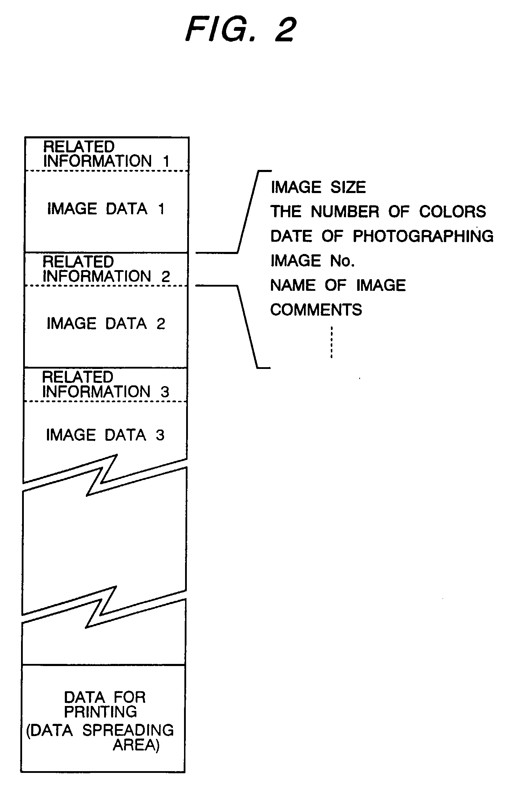

In accordance with the digital camera indicated in FIG. 1, both the photographing image and the information relating to the photographed image can be recorded in a form indicated in FIG. 2.

Image data 1, image data 2, and image data 3 indicated in FIG. 2 are information relating to the photographed images. Related information 1, related information 2, and related information 3 are the information relating to each of the image data 1, the image data 2, and the image data 3. The related information are, for instance, data and time of the photographing, image number, comments , and others. The related information can be stored by a method explained hereinafter.

The date and time of photographing can be recorded in the image data recording means 105 by providing a calendar function to the system controlling means 101.

The image number can be recorded in the image data recording means 105 by controlling the number of photographed images by the system controlling means 101.

The comments can be input into the image displaying means 104 by transmitting instruction to the system controlling means 101 by operating the operating means 107 as literally input menu. The comments input as the menu can be recorded into the image data recording means 105 by the system controlling means 101.

In accordance with the present invention, printing of the image data indicated in FIG. 2 is performed as follows:

In accordance with the operating means 107, an instruction for printing the image data 1 recorded in the image data recording means 105 is transmitted to the system controlling means 101.

The system controlling means 101 reads out the image data 1 recorded in the image data recording means 105, and converts to the image data 1 to the data for printing. Then, the system controlling means 101 records the data for printing of the image data 1 in a data spreading area provided in a part of the image data recording means 105 indicated in FIG. 2.

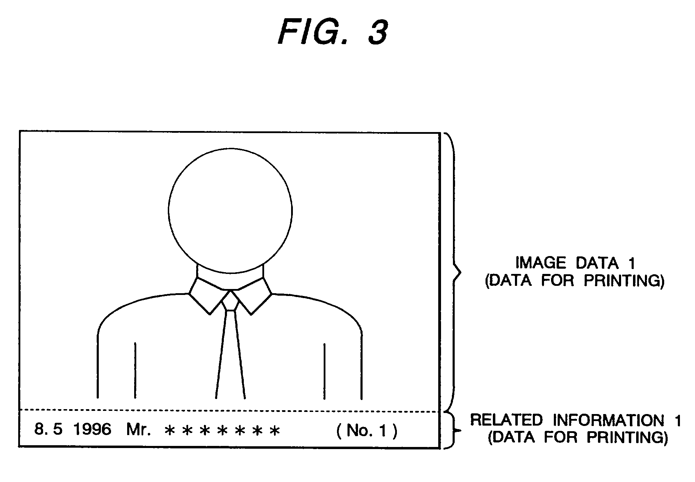

The system controlling means 101 reads out the related information 1 recorded in the image data recording means 105, and converts to the related information 1 to the data for printing. Subsequently, the system controlling means 101 records the data for printing of the related information 1 in the data spreading area in the image data recording means 105 indicated in FIG. 2, at a location subsequent to the data for printing the image data 1 which has been recorded previously. (An image of data for printing recorded in the data spreading area indicated in FIG. 2 by the above procedure is indicated in FIG. 3.) Subsequently, the system controlling means 101 transmits the data for printing recorded in the data spreading area to the printer 108.

The printer 108 prints the data for printing.

As explained above, in accordance with the present invention, the image data and the related information can be printed on the same piece of paper by spreading the image data and the related information into the data spreading area for printing provided in the image data recording means 105. Therefore, one of the conventional problems can be solved.

(In the above explanation, the related information was spread subsequent to the image data. However, the image data and the related information can be arranged arbitrarily, if the composition is as indicated in FIG. 1. In the present example, the data spreading area was provided in the image data recording means 105, but, the data for printing can be spread similarly by using other data recording means, such as the image data temporary storing means 103.)

### (3) The printing of the numbered thumb-nail.

In accordance with the conventional printing system comprising a digital camera and a printer, reduced images (thumb-nail) of plural images recorded in the digital camera could be displayed side-by side in the image displaying means. Accordingly, the recorded plural images could be recognized at a glance. Furthermore, the thumb-nail arranged on the image displaying means could be printed. However, in accordance with the result of printing the thumb-nail in the conventional printing system, the kind of recorded images could be recognized, but, the locations where the individual original images of the thumb-nail were recorded in the image data recording means of the digital camera were not recognizable.

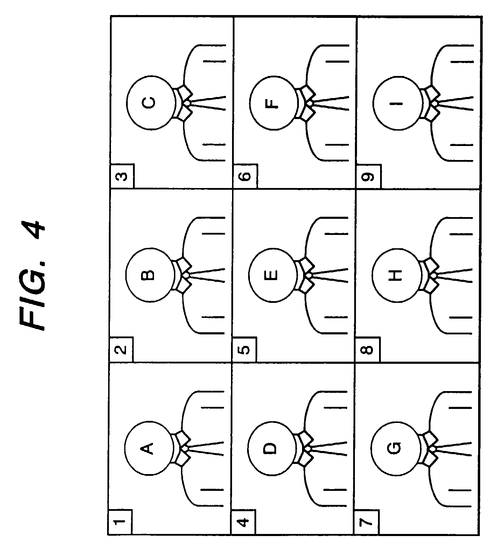

In accordance with the present invention, the above problem can be solved by numbering the thumb-nails, and printing the numbered thumb-nails. Hereinafter, a method for the above procedure is explained referring to FIGs. 2 and 4.

A procedure for numbering the thumb-nails in the printing system indicated in FIG. 1 is explained, hereinafter.

In the following explanation, nine images of image data 1∼9 are assumed to be recorded in the image data recording means 105. Each of the image data has related information, and image numbers are recorded in the related information. The image number is recorded by the system controlling means 101 at recording the photographed image. The method for generating thumb-nail (reduced image) can be realized easily by thinning the original image data, and the method is well known to the public. Therefore, explanation of the method in detail is omitted.
1. An instruction to display thumb-nail is sent to the system controlling means 101 by the operating means 107.

The system controlling means 101 reads out the image data 1∼9 from the image data recording means 105, and reduces each of the image data 1∼9 in size to obtain thumb-nail. Subsequently, the nine thumb-nails of the image data 1∼9 are input side-by-side into the image data temporary storing means 103. Accordingly, displaying the nine thumb-nails in the image displaying means 104 becomes possible.

An instruction for displaying the image number into each of the thumb-nails displayed in the image displaying means 104 is sent to the system controlling means 101 by the operating means 107.

The system controlling means 101 reads out the image numbers from the related information 1 ∼ 9, which are related to each of the image data 1 ∼ 9, in the image data recording means 105. The system controlling means 101 writes down the image number into a part of the nine thumb-nail in the image data temporary storing means 103. Accordingly, the numbered thumb-nail is displayed in the image displaying means 104. A display image of the numbered thumb-nail is indicated in FIG. 4.

An instruction for printing the numbered thumb-nail displayed in the displaying means 104 is sent to the system controlling means 101 by the operating means 107.

The system controlling means 101 reads out the image data of the numbered thumb-nail from the image data temporary storing means 103. Furthermore, the system controlling means 101 converts the read out image data to the data for printing, and records the data for printing into the data spreading area for the data for printing in the image data recording means 105. Subsequently, the system controlling means 101 sends the data for printing recorded in the image data recording means 105 to the printer 108.

The printer 108 prints the data for printing of the numbered thumb-nail onto paper.

The result of printing the thumb-nail attached with the image number can be obtained in accordance with the above procedure. Therefore, a content of the image recorded in the digital camera can be confirmed from the result of printing. Furthermore, the recorded location of each of original images of the thumb-nails in the image data recording means of the digital camera, which has been impossible to be recognized hitherto, can be recognized at a glance. In the present explanation, the image number was superimposed onto a part of the thumb-nail in the image data temporary storing means 103. However, when the numbering of the image is desired only onto the result of printing, the numbering of the thumb-nail maybe performed in the image data recording means 105.

### (4) The invention relating to printing the list of information related to the image.

The result of printing the thumb-nail in the conventional printing system comprising a digital camera and a printer had no value other than recognition of the stored images. In accordance with the present invention, a value of utilizing the result of printing the thumb-nail can be increased by printing a list of related information on each of the original images of individual thumb-nail in the result of printing. Hereinafter, a method for printing the list of image related information is explained referring to FIGs. 1, 2, and 5. In the following explanation, nine images of image data 1∼9 are assumed to be recorded in the image data recording means 105. Each of the image data has related information, and image numbers are recorded in the related information. The related information is recorded by the system controlling means 101 at taking photographs. The related information can be added by users using the literal input menu of the digital camera. In the present explanation, the related information is assumed to have been recorded. Regarding the literal input procedure, the previous "(2) The invention relating to printing information related to the image data" is to be referred.

An instruction for printing the related information 1∼9 of the image data 1∼9 recorded in the image recording means 105 is sent to the system controlling means 101 by the operating means 107.

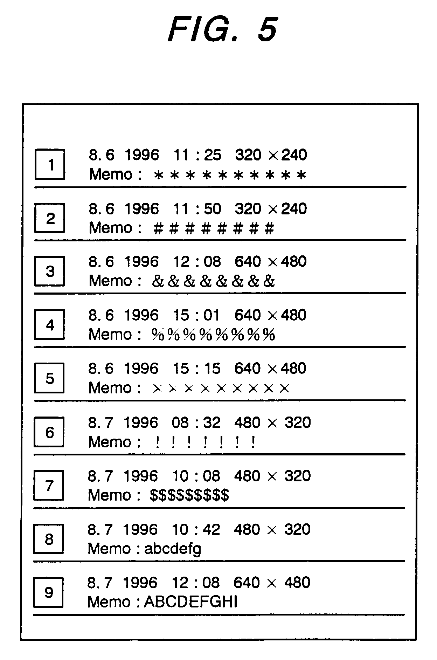

The system controlling means 101 reads out the related information 1∼9 from the image data recording means 105, and converts the read out related information to the data for printing. Subsequently, the system controlling means 101 records the data for printing into the spreading area (indicated in FIG. 2) for the data for printing in the image data recording means 105 so that the related information becomes a list (a spread image is indicated in FIG. 5). Subsequently, the system controlling means 101 sends the data for printing the list of the related information to the printer 108.

The printer 108 prints the data for printing the list of the related information onto paper.

In accordance with the above procedure, the list of the related information as indicated in FIG. 5 can be printed. By concurrently using the result of printing the list of the related information and the result of printing the numbered thumb-nail by the previous "(3) The invention relating to printing the numbered thumb-nail", details of the images recorded in the digital camera can be recognized.

The present invention can be progressed to print the related information of the image and the thumb-nail of the image responding to the related information onto the same piece of paper, Therefore, the image and the related information of the image recorded in the digital camera can be recognized at a glance.

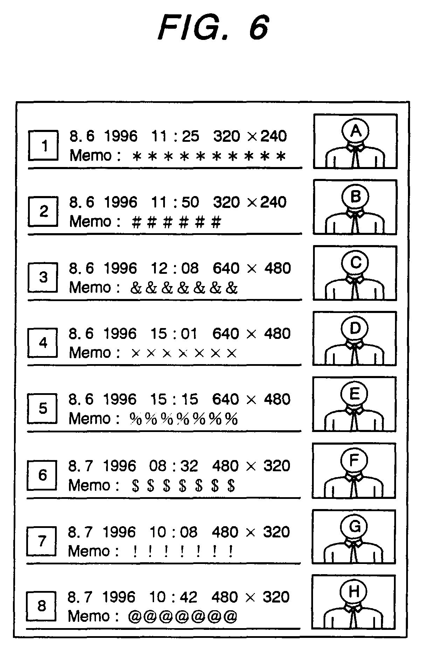

The image indicated in FIG. 6 can be realized by recording the related information in the spread area for the data for printing in the image data recording means 105, and subsequently recording the thumb-nail.

Irrespective of the recording order of the data for printing to the image data recording means 105, only the image of the data for printing indicated in FIG. 6 must be recorded in the image data recording means 105.

### (5) The invention relating to printing the correlated image data.

In accordance with the conventional printing system comprising a digital camera and a printer, the plural images stored in the digital camera were independent information, and were not correlated. For instance, assuming a person A and a name card of the person A were photographed by a digital camera. The image data of the person A recorded in the digital camera and the image data of the name card of the person A are naturally correlated. However, in accordance with the conventional digital camera, each of the image data of the person A and the image data of the name card of the person A are treated as independent data. Accordingly, when each of the image data of the person A and the image data of the name card of the person A were printed, the user had to maintain the two printed results as correlated data.

In accordance with the present invention, plural image data recorded by the digital camera are correlated, and the correlated image data are printed onto the same piece of paper. Therefore, the user can be free from maintaining the correlation of the plural printed results.

Hereinafter, a method for performing the present invention is explained referring to FIGs. 1, 2, and 7. In the present explanation, it is assumed that the image data of a person and the image data of the name card of the person are printed onto the same piece of paper. Furthermore, it is assumed that the image data of the person and the image data of the name card of the person are recorded previously in a digital camera, and the image data of the person is recorded in the image data 1 indicated in FIG. 2 and the image data of the name card is recorded in the image data 2 indicated in FIG. 2.

An instruction for displaying the image data correlating menu is sent to the system controlling means 101 by the operating means 107.

The system controlling means 101 displays the image data correlating menu in the image displaying means 104.

An operation to correlate the image data 1 and the image data 2, both of which are recorded in the image data recording means 105, is performed by the operating means 107.

The system controlling means 101 writes down information, indicating that the image data 1 and the image data 2 have been correlated by the correlating operation of the operating means 107, into each of the related information 1 and the related information 2, which are recorded in the image data recording means 105.

An instruction for printing the image data 1 recorded in the image data recording means 105 is sent to the system controlling means 101 by the operating means 107.

The system controlling means 101 reads out the related information 1 relating to the image data 1 recorded in the image data recording means 105, and recognizes that the image data 1 and the image data 2 are correlated. Subsequently, the system controlling means 101 reads out the image data 1 from the image data recording means 105, and converts the image data 1 to the data for printing. The system controlling means 101 writes down the data for printing into the data spreading area for the data for printing in the image data recording means 105. Subsequently, the system controlling means 101 reads out the image data 2 from the image data recording means 105, and converts to the data for printing. The system controlling means 101 writes down the data for printing of the image data 2 successively after the data for printing of the image data 1 into the data spreading area for the data for printing in the image data recording means 105. Finally, the data for printing, which is composed by merging the image data 1 and the image data 2, is sent to the printer 108.

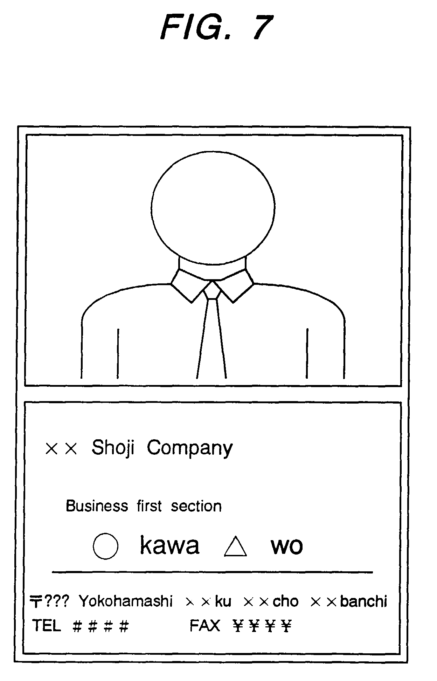

The printer 108 prints the image data 1 (the image of the person) and the image data 2 (the image of the name card) onto the same piece of paper (an image of the result of the printing is indicated in FIG. 7).

As explained above, the results of the printing can be readily managed by correlating the plural images recorded in the digital camera, and printing the correlated plural images onto the same piece of paper.

The invention relating to the printing system provided with an electric power supplying source.

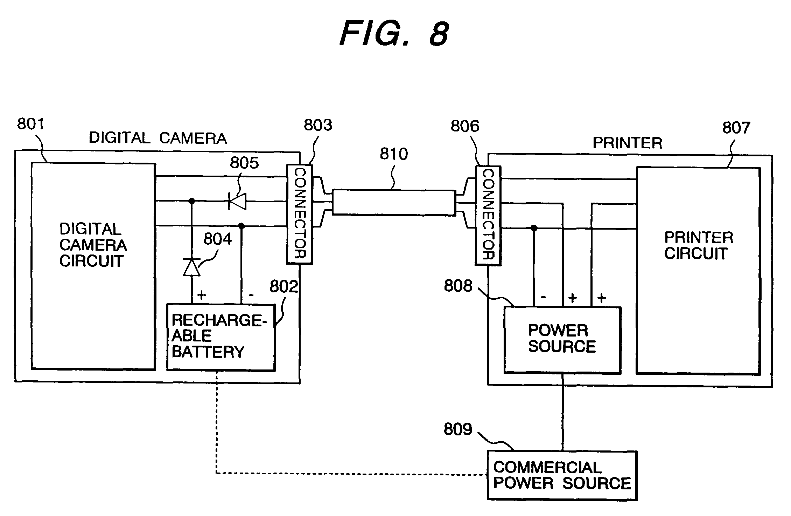

In accordance with conventional printing system comprising a digital camera and a printer, it was necessary to supply electric power from a commercial power source to both the digital camera and the printer at the printing operation, if rechargeable batteries for driving the digital camera was not sufficiently charged. Therefore, if the number of outlets of the power source is small, sometimes the user felt inconvenience. However, in accordance with the present invention, electric power supplying from commercial power source to the digital camera becomes unnecessary, and one of the conventional problems can be solved. Hereinafter, a method of the present invention is explained referring to FIG. 8.

FIG. 8 is explained, hereinafter.

The numeral mark 801 indicates a circuit portion of the digital camera. The mark 802 indicates rechargeable battery, 803 is a connector, 804 is a diode for protection, 805 is a diode for protection, 806 is a connector, 807 is a printer circuit, 808 is a power source, 809 is a commercial power source, and 810 is signal and power cables.

When printing, the connector 803 of the digital camera and the connector 806 of the printer are connected by the signal and power cables 810. Accordingly, transmission of necessary data for printing from the digital camera to the printer becomes possible. Simultaneously, an electric power supply from the power source 808 in the printer to the circuit 801 of the digital camera through the positive and negative power line becomes possible. Accordingly, connection of the digital camera to the commercial power source 809 becomes unnecessary, and the digital camera can be used without charging the rechargeable batteries 802.

As explained above, the power source for the digital camera becomes free from concern by taking a composition wherein both the signal line and the power line of the digital camera and the printer are simultaneously connected together. In the above example, the digital camera and the printer are connected by cables. However, the same advantage can be realized by using direct connectors which can connect the digital camera and the printer directly.

In accordance with the present invention, the printing becomes possible by only operating the digital camera, and a charged amount of the batteries of the digital camera becomes free from concern by supplying electric power from the printer to the digital camera. Therefore, operability of the printing system can be improved. Furthermore, a novel result of printing, wherein the image data and the information related to the image data are connected together, can be generated by merging the image data and the information related to the image data together, and values of the results of printing can be increased.

## Claims

1. A printing system comprising :
a digital camera and a printer;
means for instructing printing from said digital camera to said printer;
wherein said printer performs printing procedure in accordance with an instruction for printing from said digital camera.

2. A printing system comprising :
a digital camera and a printer;
data recording means for recording information relating to image data photographed by said digital camera;
wherein an image obtained by merging the image data and the information relating to said image data is printed onto a piece of paper by merging said image data and said information relating to said image data into integrated data, and subsequently printing said integrated data.

3. A printing system as claimed in claim 2, wherein
information relating to various images, which are stored in said digital camera, are merged into the integrated data to form a list of related information, and information relating to plural images are printed as a list onto a piece of paper by printing subsequent to said merging.

4. A printing system comprising a digital camera and a printer, wherein a plurality of numbered thumb-nail data are printed onto a piece of paper by a method comprising the steps of:
preparing thumb-nail data of various images recorded in said digital camera;
numbering said thumb-nail data of various images by superimposing numbering data onto a part of said prepared various thumb-nail data;
arranging said numbered thumb-nail data orderly to form integrated data; and
printing subsequently said integrated data onto a piece of paper.

5. A printing system as claimed in claim 4, wherein said thumb-nail and related information are merged and printed as a list onto a piece of paper by a method comprising the steps of:
providing data recording means for recording information relating to said image data photographed by said digital camera;
merging information related to various thumb-nail of various images recorded in said digital camera together; and
printing subsequently said merged information onto a piece of paper.

6. A printing system comprising a digital camera and a printer, wherein a function to correlate plural images recorded by said digital camera each other is provided to the printing system, and said correlated plural images are printed onto a piece of paper.
A printing system comprising :
digital camera and a printer; and
an electric power supplying means for supplying electric power to said digital camera ;
wherein an electric power line of said printer is connected to an electric power line of said digital camera, in addition to connecting signal lines of said printer and said digital camera, and accordingly said digital camera can be driven by supplying electric power from said printer.
